# EUROPÄISCHE PATENTSCHRIFT

(11) **EP 0 603 227 B1**
(45) Veröffentlichungstag und Bekanntmachung des Hinweises auf die Patenterteilung: **01.02.1995**
(21) Anmeldenummer: 92918524.7
(22) Anmeldetag: 01.09.1992
(51) Int. Cl.: F01N 3/28, B01J 35/04

(54) **ELEKTRISCHE ISOLIERUNG VON STRUKTUREN IN EINEM WABENKÖRPER, INSBESONDERE EINEM ELEKTRISCH BEHEIZBAREN KATALYSATOR-TRÄGERKÖRPER**
ELECTRIC INSULATION OF STRUCTURES IN A HONEYCOMBED BODY, IN PARTICULAR IN A CATALYZER BEARING BODY THAT CAN BE ELECTRICALLY HEATED
ISOLATION ELECTRIQUE DE STRUCTURES DANS UN CORPS A NID D'ABEILLES, EN PARTICULIER DANS UN CORPS DE SUPPORT DE CATALYSEUR POUVANT ETRE CHAUFFE ELECTRIQUEMENT

(30) Priorität: 09.09.1991 DE 4129894
(43) Veröffentlichungstag der Anmeldung: 29.06.1994
(73) Patentinhaber: Emitec Gesellschaft für Emissionstechnologie mbH, 53797 Lohmar (DE)
(72) Erfinder: MAUS, Wolfgang, D-5060 Bergisch Gladbach 1 (DE); BRÜCK, Rolf, D-5060 Bergisch Gladbach 1 (DE)
(74) Vertreter: Kahlhöfer, Hermann, Dipl.-Phys.
(86) Internationale Anmeldenummer: EP9202008
(87) Internationale Veröffentlichungsnummer: WO9305283

(56) Entgegenhaltungen:
- WO-A-89/10471
- GB-A- 1 006 809
- GB-A- 1 020 316

## Beschreibung

Die vorliegende Erfindung betrifft die Gestaltung elektrisch isolierender Zwischenschichten zwischen Strukturen in einem Wabenkörper, insbesondere einem elektrisch beheizbaren Katalaysator-Trägerkörper für Kraftfahrzeuge.

Zur Verringerung des Schadstoffausstoßes von Verbrennungsmotoren, insbesondere bei Kraftfahrzeugen werden katalytische Konverter eingesetzt, insbesondere auch elektrisch beheizbare katalytische Konverter zur Reduzierung des Schadstoffausstoßes schon in der Kaltstartphase. Elektrisch beheizbare Wabenkörper sind beispielsweise in der WO 89/10471 in verschiedenen Ausführungsformen beschrieben. Zur Erzielung eines geeigneten Widerstandes werden elektrisch beheizbare Wabenkörper mit elektrisch isolierenden Zwischenschichten ausgestattet, zwischen welchen der elektrische Strom einen definierten Weg nimmt. In Abgasanlagen von Kraftfahrzeugen sind solche elektrisch beheizbaren Wabenkörper auch erheblichen mechanischen Belastungen ausgesetzt, insbesondere thermischen Wechselbelastungen. Die bisher bekannten elektrisch isolierenden Zwischenschichten oder Spalte können im allgemeinen keine starken mechanischen Zugkräfte aufnehmen, was bei der Konstruktion und Fertigung von solchen Wabenkörpern als Einschränkung zu berücksichtigen ist.

Aus der WO 89/07488 sind auch schon Wabenkörper bekannt, welche eine oder mehrere verstärkte Blechlagen aufweisen, wobei die verstärkten Blechlagen insbesondere auch aus mehreren gleichartig strukturierten aneinanderliegenden Blechlagen bestehen können.

Weiter sind aus dem Stand der Technik eine Vielzahl von anderen Bauformen für metallische Wabenkörper bekannt, insbesondere spiralig gewickelte Wabenkörper oder aus etwa evolventenförmig verlaufenden Blechlagen aufgebaute Körper.

Aufgabe der vorliegenden Erfindung ist die Schaffung einer elektrischen Isolierung zwischen Strukturen solcher Wabenkörper, welche sich besonders einfach in einen Herstellungsprozeß integrieren läßt und dabei zusätzlich mechanische Kräfte aufnehmen, insbesondere auch Zugkräfte aushalten kann. Auf diesen Weise soll der Aufbau elektrisch beheizbarer Wabenkörper vereinfacht werden unter gleichzeitiger Erhöhung der mechanischen Belastbarkeit.

Zur Lösung dieser Aufgabe dient ein Wabenkörper, insbesondere Katalysator-Trägerkörper, aus zumindest teilweise strukturierten Blechlagen, welche eine Vielzahl von für ein Fluid durchströmbaren Kanälen bilden, wobei der Wabenkörper eine elektrisch isolierende Zwischenschicht aufweist und die Zwischenschicht mindestens zwei miteinander mechanisch verklammerte, aber elektrisch durch eine Isolierschicht voneinander isolierte Blechlagen enthält. Wie anhand der Zeichnung näher erläutert wird, können zwei Blechlagen trotz elektrischer Isolierung so miteinander verklammert werden, daß mechanische Zugkräfte von der Verklammerung und nicht von der zwischen den Blechlagen angeordneten Isolierung aufgenommen wird. Dabei sind Verklammerungen möglich, welche besonders elastisch auf Zugkräfte reagieren, und andere, welche große Zugkräfte ohne starke Verformung aufnehmen können.

Besonders vorteilhaft bei der vorliegenden Erfindung ist es, wenn die Zwischenschicht so ausgestaltet wird, daß die verklammerten Blechlagen beidseitig großflächig aus Metall bestehen und so beidseitig durch Löten oder ähnliche fügetechnische Prozesse mit anderen Blechlagen verbindbar sind.

Zwar sind aus der WO 89/10471 Blechlagen mit keramischer Zwischenschicht bekannt, welche formschlüssig ineinanderragen zur Aufnahme axialer Kräfte, jedoch sind diese Bleche nicht verklammert, so daß eine Zugbelastung die Bleche immer noch auseinanderreißen könnte. Dies soll bei der vorliegenden Erfindung unter Beibehaltung der Möglichkeit beidseitiger Anbindung an benachbarte Blechlagen vermieden werden.

Wie anhand einiger Ausführungsbeispiele in der Zeichnung näher erläutert, besteht die einfachste Form der Verklammerung darin, daß die eine Blechlage die andere Blechlage an deren Seitenkanten umgreift. Eine andere, elastischere Verklammerung besteht darin, daß die Blechlagen gegenseitig umeinander gefaltet sind. Auch Formen, bei denen die Blechlagen mehrfach formschlüssig umeinander gefaltet oder ineinander geschachtelt sind, sind möglich.

Besonders günstig kann es sein, zwischen den verklammerten Blechlagen noch einen oder mehrere von den Blechlagen elektrisch isolierte elektrische Leiter anzuordnen, welche beispielsweise als Temperaturfühler dienen können. Ohne erheblichen zusätzlichen Montageaufwand kann auf diese Weise ein linienförmiger oder flächiger Temperaturfühler in den Wabenkörper integriert werden, was insbesondere bei beheizbaren katalytischen Konvertern für deren Regelung von Vorteil ist.

Als besonders günstig hat sich erwiesen, die verklammerten Blechlagen nicht als glatte Zwischenschicht, sondern als strukturierte, insbesondere gewellte, Zwischenschicht zu verwenden. Auf diesen Weise wird eine größere Flexibilität der Zwischenlage erreicht als dies bei einer aus mehreren Lagen bestehenden glatten Zwischenlage möglich ist. Die Herstellung verklammerter Blechlagen ist besonders einfach durch Walzen möglich. So können die vorgefalteten und mit einer Isolierschicht versehenen Blechlagen zur Reduzierung der Dicke der Zwischenschicht zwischen einem Walzenpaar, gewalzt werden. Insbesondere ist auch das Walzen zwischen Wellwalzen, wie sie für die Strukturierung von Blechen für Wabenkörper weithin bekannt sind, problemlos möglich.

Beim späteren Aufbau eines Wabenkörpers unter Verwendung erfindungsgemäßer elektrisch isolierender Zwischenschichten muß natürlich sichergestellt werden, daß die elektrische Isolierung der verklammerten Blechlagen nicht durch benachbarte Strukturen überbrückt wird. Dies kann z. B. dadurch erreicht werden, daß die verklammerten Blechlagen stirnseitig über die anderen Blechlagen des Wabenkörpers so weit hinausragen, wie die Verklammerung der einen Blechlage die andere Blechlage umgreift. Auf diese Weise wird ein Kurzschluß sicher vermieden, jedoch ist die stirnseitige Verlötung solcher Wabenkörper etwas problematisch.

Eine andere Möglichkeit besteht daher darin, daß die an die verklammerten Blechlagen angrenzenden anderen Blechlagen des Wabenkörpers soweit verkürzt werden, wie die Verklammerung der einen Blechlage die andere Blechlage umgreift. In diesem Falle kann wie üblich eine stirnseitige Verlötung erfolgen, wobei lediglich die Verbindung zwischen den verkürzten Blechlagen und der Zwischenschicht gesondert, beispielsweise durch Einlegen von Lötfolien hergestellt werden muß.

Darüber hinaus gibt es, wie anhand der Zeichnung erläutert wird, auch Formen der Verklammerung, bei denen ein bündiges Abschließen der Zwischenschicht mit den übrigen Blechlagen an den Stirnseiten des Wabenkörpers möglich ist.

Für die Stabilität des gesamten Wabenkörpers und für eine einheitliche Fertigungstechnik ist es von Vorteil, wenn die Außenflächen der verklammerten Blechlagen mit benachbarten anderen Blechlagen in gleicher Weise fügetechnisch verbunden, vorzugsweise hartgelötet, werden, wie dies zwischen den übrigen Blechlagen auch der Fall ist.

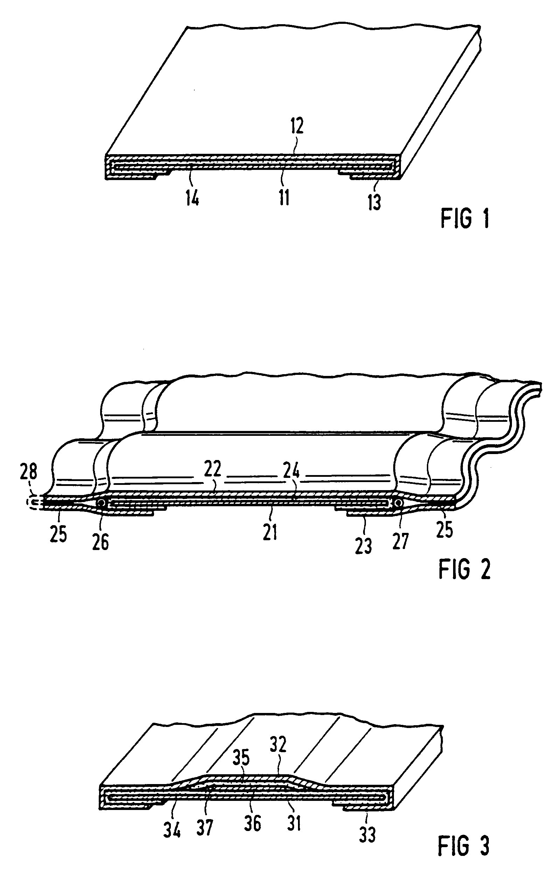

Ausführungsbeispiele der Erfindung sind in schematischer Form in der Zeichnung dargestellt, jedoch ist die Erfindung nicht auf diese Beispiele beschränkt. Es zeigen Figur 1 einen perspektivischen Querschnitt durch eine erfindungsgemäße isolierende Zwischenschicht aus glatten Blechlagen,
Figur 2 eine gewellte Zwischenschicht mit integrierten Temperaturfühlern,
Figur 3 eine glatte Zwischenschicht mit einem zusätzlichen integrierten Leiter,
Figuren 4, 5 und 6 verschiedene Verklammerungsformen, Figur 7 eine Verklammerungsform mit zusätzlichem integrierten elektrischen Leiter,
Figur 8 die Einbindung einer über die Stirnseiten eines Wabenkörpers hinausragenden Zwischenschicht und
Figur 9 die Einbindung einer nicht über die Stirnseiten des Wabenkörpers hinausragende Zwischenschicht.

Figur 1 zeigt einen Querschnitt durch die einfachste Ausführungsform der vorliegenden Erfindung, bei der eine glatte Blechlage 11 durch eine Isolierschicht 14 von einer glatten Blechlage 12 getrennt ist. Die Außenkanten 13 der glatten Blechlage 12 umgreifen gemeinsam mit der Isolierschicht 14 die Blechlage 11, wobei die Isolierschicht 14 geringfügig über die Verklammerung 13 überstehen soll.

Figur 2 zeigt, daß erfindungsgemäße Zwischenschichten auch bevorzugt gewellt ausgeführt werden können, wobei wiederum eine Blechlage 21 durch eine Isolierschicht 24 von einer anderen Blechlage 22 getrennt ist. Eine Verklammerung zwischen den beiden Blechlagen 21, 22 kann wiederum durch Umbiegen der Außenkanten 23 der Blechlage 22 erfolgen, wie dies gestrichelt als gefaltete Kante 28 angedeutet ist. Es besteht jedoch auch die Möglichkeit, die Verklammerung 23 durch Anlöten von Zusatzteilen zu erzielen, wobei beispielsweise eine Lötfolie 25 eingelegt und mit eingewalzt wird, welche bei einem späteren Lötvorgang dann eine feste Verbindung herstellt. Das Einlegen der Lötfolie 25 kann auch bei Verwendung gefalteter Kanten 28 von Vorteil sein, da scharf gefaltete Kanten 28 möglicherweise brüchig werden können und dann nicht die gewünschte Funktion, nämlich Zugkräfte aufzunehmen, gewährleisten können. Bei dem vorliegenden Ausführungsbeispiel sind zusätzlich zwei Mantelmeßleiter 26, 27 in die Verklammerung integriert, was gerade bei der dargestellten Anordnung seitlich neben der Blechlage 21 problemlos möglich ist.

Figur 3 zeigt eine andere Variante zur Integration eines zusätzlichen elektrischen Leiters 36 zwischen zwei verklammerte Bleche 31, 32. Zusätzlich zu der Isolierschicht 34 zwischen den Blechlagen 31, 32 wird eine zusätzliche Isolierschicht 35 erforderlich. Durch gemeinsames Einwalzen aller Schichten ergibt sich dabei nur eine kleine Auswölbung der Blechlage 32 und es verbleiben nur geringe ungenützte Hohlräume 37.

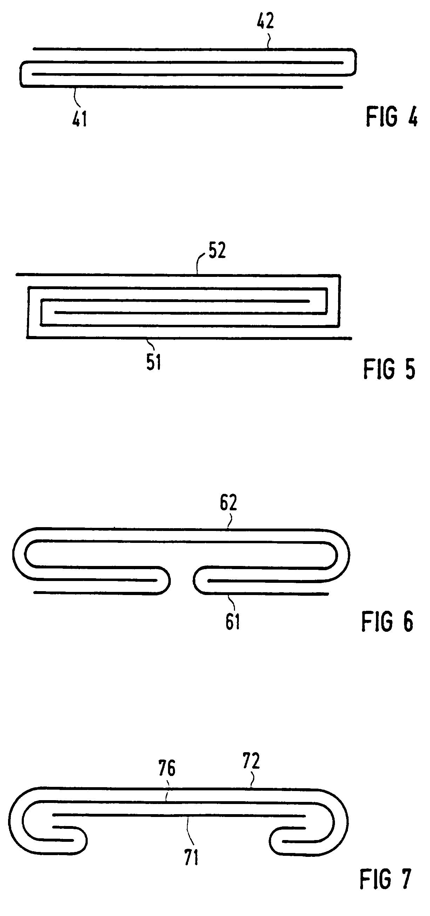

Die Figuren 4, 5, 6 und 7 zeigen schematisch im Querschnitt beispielhaft verschiedene Formen der Verklammerung, wobei die Isolierschichten nicht dargestellt sind. Auch ist die Darstellung nicht maßstäblich, da nach dem Zusammenwalzen insgesamt eine Zwischenschicht von beispielsweise nur 0,1 bis 1 mm entsteht.

Figur 4 zeigt eine elastische Art der Verklammerung, bei der zwei Blechseiten gegenseitig umeinander gefaltet sind. Diese Art der Verklammerung reagiert auf Zug sehr elastisch, ohne daß die Lagen jedoch auseinandergerissen werden können.

Figur 5 zeigt zwei mehrfach umeinander gefaltete Blechlagen 51, 52, wobei die dortige Anordnung ebenfalls sehr elastisch auf Zug reagiert, aber zusätzlich auch gegen Parallelverschiebung in jeder Richtung gesichert ist.

Figur 6 zeigt eine Verklammerung, bei der eine Blechlage 62 eine etwa omega-förmig gebogene zweite Blechlage 61 umgreift. Bei dieser Anordnung, die ebenfalls sehr elastisch auf Zug reagiert, können beide Außenseiten problemlos mit benachbarten Blechlagen verlötet werden, ohne das ein Kurzschluß zu befürchten ist.

In Figur 7 sind zwei Blechlagen 71, 72 und ein zusätzlicher elektrischer Leiter 76 auf besondere Weise miteinander verklammert. Zunächst umgreift der elektrische Leiter 76 die eine Blechlage 71. Außerdem umgreift die Blechlage 72 gemeinsam beide Lagen 71 und 76.

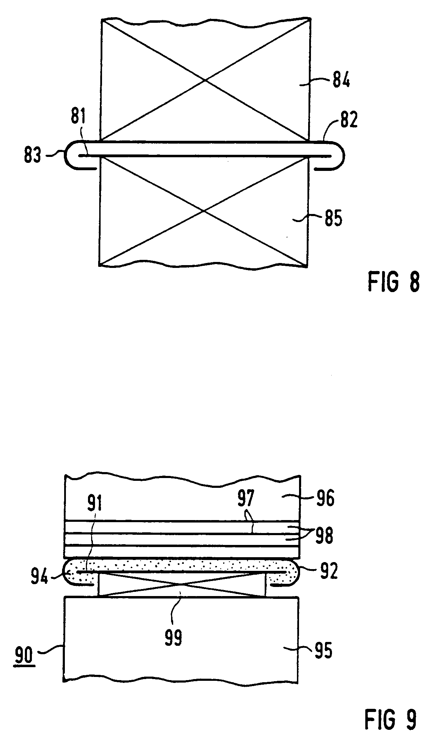

Die Figuren 8 und 9 zeigen mögliche Einbindungen erfindungsgemäßer Zwischenschichten in einen Wabenkörper. Figur 8 zeigt in einem schematischen Längsschnitt durch einen Teil eines Wabenkörpers eine Variante, bei der die elektrisch isolierende Zwischenschicht beidseitig über die Stirnseiten des Wabenkörpers hinausragt. Die anderen Blechlagen 84, 85 des Wabenkörpers sind außen an die Blechlagen 81 bzw. 82 angelötet, wobei die Verklammerung 83 über die Stirnseiten des so gebildeten Wabenkörpers hinausragt.

In Figur 9 ist schematisch im Längsschnitt eine andere Variante zur Einbindung verklammerter Blechlagen dargestellt. Der Wabenkörper 90 besteht aus strukturierten Blechlagen 97, welche für ein Fluid durchlässige Kanäle 98 in bekannter Weise bilden. Verschiedene Segmente 95, 96 des Wabenkörpers 90 sind durch die isolierende Zwischenschicht 91, 92, 93, 94 elektrisch voneinander isoliert, wobei die Blechlage 92 an die anderen Blechlagen 97 des Segmentes 96 direkt angelötet ist, während die Verbindung zu dem Segment 95 über verkürzte angrenzende Blechlagen 99 erfolgt. Sofern die Zwischenschicht 91, 92, 93, 94 aus glatten Blechlagen besteht, ist die angrenzende Blechlage 99 eine verkürzte gewellte Blechlage. Falls die Zwischenschicht selbst gewellt ist, müssen sich u. U. zwei verkürzte strukturierte Blechlagen anschließen, um einen Kurzschluß an den Verklammerungen 93 zu vermeiden.

Es sei noch darauf hingewiesen, daß sich erfindungsgemäße Zwischenschichten durch Walzen praktisch in jeder gewünschten Struktur herstellen lassen, insbesondere als glatte Lagen, gewellte Lagen, schräg gewellte Lagen, mit pfeilförmiger Wellung etc. Die Einbindung erfindungsgemäßer Zwischenlagen in einen Fertigungsprozeß kann bei vielen Ausführungsformen ganz analog zu den in der WO 89/07488 und den dort zitierten Schriften beschriebenen Verfahren erfolgen, wobei gegebenenfalls lediglich berücksichtigt werden muß, daß keine Kurzschlüsse im Bereich der Verklammerung entstehen.

Die vorliegende Erfindung eignet sich insbesondere zur Herstellung elektrischer Isolierungen in elektrisch beheizbaren Katalysator-Trägerkörpern für Kraftfahrzeuge.

## Patentansprüche

1. Wabenkörper (90), insbesondere Katalysator-Trägerkörper, aus zumindest teilweise strukturierten Blechlagen (97), welche eine Vielzahl von für ein Fluid durchströmbaren Kanälen (98) bilden, wobei der Wabenkörper (90) eine elektrisch isolierende Zwischenschicht (11, 12, 13, 14; 21, 22, 23, 24; 31, 32, 33, 34; 41, 42; 51, 52; 61, 62; 71, 72; 81, 82; 91, 92, 93, 94) aufweist, **dadurch gekennzeichnet**, daß die Zwischenschicht (11, 12, 13, 14; 21, 22, 23, 24; 31, 32, 33, 34; 41, 42; 51, 52; 61, 62; 71, 72; 81, 82; 91, 92, 93, 94) mindestens zwei miteinander mechanisch verklammerte, aber elektrisch durch eine Isolierschicht (14; 24; 34; 94) voneinander isolierte Blechlagen (11, 12; 21, 22; 31, 32; 41, 42; 51, 52; 61, 62; 71, 72; 81, 81; 91, 92) enthält.

2. Wabenkörper (90) nach Anspruch 1, **dadurch gekennzeichnet**, daß die verklammerten Blechlagen (11, 12; 21, 22; 31, 32; 41, 42; 51, 52; 61, 62; 71, 72; 81, 81; 91, 92) zusammen eine Zwischenschicht (11, 12, 13, 14; 21, 22, 23, 24; 31, 32, 33, 34; 41, 42; 51, 52; 61, 62; 71, 72; 81, 82; 91, 92, 93, 94) bilden, welche beidseitig großflächig aus Metall besteht und beidseitig durch Löten oder ähnlich fügetechnische Prozesse mit anderen Blechlagen (97, 99) verbindbar ist.

3. Wabenkörper (90) nach Anspruch 1 oder 2, **dadurch gekennzeichnet**, daß die verklammerten Blechlagen (11, 12; 21, 22; 31, 32; 41, 42; 51, 52; 61, 62; 71, 72; 81, 81; 91, 92) eine mechanisch auf Zug belastbare elektrisch isolierende Zwischenschicht (11, 12, 13, 14; 21, 22, 23, 24; 31, 32, 33, 34; 41, 42; 51, 52; 61, 62; 71, 72; 81, 82; 91, 92, 93, 94) bilden, wobei die Zugkräfte durch die Verklammerung von Teilbereichen (13, 23; 33; 83; 93) der Blechlagen (11, 12; 21, 22; 31, 32; 41, 42; 51, 52; 61, 62; 71, 72; 81, 81; 91, 92) und nicht von der Isolierschicht (14; 24; 34; 94) aufgenommen werden.

4. Wabenkörper nach Anspruch 1, 2 oder 3, **dadurch gekennzeichnet**, daß mindestens eine der verklammerten Blechlagen (12; 22; 32; 72; 82; 92) und die Isolierschicht (14; 24; 34; 94) die andere Blechlage (11; 21; 31; 71; 81; 91) an deren Seitenkanten umgreift.

5. Wabenkörper nach Anspruch 1, 2 oder 3, **dadurch gekennzeichnet**, daß die verklammerten Blechlagen (41, 42) gegenseitig umeinander gefaltet sind.

6. Wabenkörper nach Anspruch 1, 2 oder 3, **dadurch gekennzeichnet**, daß die verklammerten Blechlagen (51, 52; 61, 62) mehrfach formschlüssig umeinandergefaltet sind.

7. Wabenkörper nach einem der vorhergehenden Ansprüche, **dadurch gekennzeichnet**, daß zwischen den verklammerten Blechlagen (21, 22, 23; 31, 32; 71, 72) noch mindestens ein von den Blechlagen (21, 22, 23; 31, 32; 71, 72) elektrisch isolierter elektrischer Leiter (26, 27; 36; 76) angeordnet ist.

8. Wabenkörper nach einem der vorhergehenden Ansprüche, **dadurch gekennzeichnet**, daß die verklammerten Blechlagen (21, 22) gemeinsam eine Struktur, insbesondere ein Wellung, aufweisen.

9. Wabenkörper nach einem der vorhergehenden Ansprüche, **dadurch gekennzeichnet**, daß die verklammerten Blechlagen (11, 12; 21, 22; 31, 32; 41, 42; 51, 52; 61, 62; 71, 72; 81, 81; 91, 92) gemeinsam zu ihrer Endform gewalzt sind.

10. Wabenkörper nach einem der Ansprüche 1, 2, 3, 4, 6 oder 9, **dadurch gekennzeichnet**, daß die verklammerten Blechlagen (81, 82) stirnseitig über die anderen Blechlagen (84, 85) des Wabenkörpers hinausragen, und zwar mindestens so weit, wie die Verklammerung (83) der einen Blechlage (82) die andere Blechlage (81) umgreift.

11. Wabenkörper nach einem der Ansprüche 1, 2, 3, 4, 6 oder 9, **dadurch gekennzeichnet**, daß die an die verklammerten Blechlagen (91, 92) angrenzenden anderen Blechlagen (99) des Wabenkörpers (90) so weit verkürzt sind, wie die Verklammerung (93) der einen Blechlage (92) die andere Blechlage (91) umgreift.

12. Wabenkörper nach einem der vorhergehenden Ansprüche, **dadurch gekennzeichnet**, daß die verklammerten Blechlagen (81, 82; 91, 92) mit ihren Außenflächen mit benachbarten anderen Blechlagen (84, 85; 97, 99) des Wabenkörper (90) zumindest in Teilbereichen fügetechnisch verbunden sind, vorzugsweise hartgelötet.

## Claims

1. A honeycomb body (90), in particular a catalyst carrier body, comprising at least partially structured sheet metal layers (97) which form a plurality of passages (98) through which a fluid can flow, wherein the honeycomb body (90) has an electrically insulating intermediate layer means (11, 12, 13, 14:21, 22, 23, 24; 31, 32, 33, 34; 41, 42; 51, 52; 61, 62; 71, 72; 81, 82; 91, 92, 93, 94) characterised in that the intermediate layer means (11, 12, 13, 14; 21, 22, 23, 24; 31, 32, 33, 34; 41, 42; 51, 52; 61, 62; 71, 72; 81, 82; 91, 92, 93, 94) includes at least two sheet metal layers (11, 12; 21, 22; 31, 32; 41, 42; 51, 52; 61, 62; 71, 72; 81, 82; 91, 92) which are mechanically clamped together but which are electrically insulated from each other by an insulating layer (14; 24; 34; 94).

2. A honeycomb body (90) according to claim 1 characterised in that the clamped sheet metal layers (11, 12; 21, 22; 31, 32; 41, 42; 51, 52; 61, 62; 71, 72;, 81, 82; 91, 92) together from an intermediate layer means (11, 12, 13, 14; 21, 22, 23, 24; 31, 32, 33, 34; 41, 42; 51, 52; 61, 62; 71, 72; 81, 82; 91, 92, 93, 94) which on both sides comprises metal over a large area and which can be connected at both sides to other sheet metal layers (97, 99) by soldering or similar joining procedures.

3. A honeycomb body (90) according to claim 1 or claim 2 characterised in that the clamped sheet metal layers (11, 12; 21, 22; 31, 32; 41, 42; 51, 52; 61, 62; 71, 72; 81, 82; 91, 92) form an electrically insulating intermediate layer means (11, 12, 13, 14; 21, 22, 23, 24; 31, 32, 33, 34; 41, 42; 51, 52; 61, 62; 71, 72; 81, 82; 91, 92, 93, 94) which can be mechanically subjected to a tensile loading, wherein the tensile forces are carried by the clamping of portions (13, 23; 33; 83; 93) of the sheet metal layers (11, 12; 21, 22; 31, 32; 41, 42; 51, 52; 61, 62; 71, 72; 81, 82; 91, 92) and not by the insulating layer (14; 24; 34; 94).

4. A honeycomb body according to claim 1, claim 2 or claim 3 characterised in that at least one of the clamped sheet metal layers (12; 22; 32; 72; 82; 92) and the insulating layer (14; 24; 34; 94) embraces the other sheet metal layer (11; 21; 31; 71; 81; 91) at the side edges thereof.

5. A honeycomb body according to claim 1, claim 2 or claim 3 characterised in that the clamped sheet metal layers (41, 42) are mutually folded around each other.

6. A honeycomb body according to claim 1, claim 2 or claim 3 characterised in that the clamped sheet metal layers (51, 52; 61, 62) are positively lockingly folded around each other a plurality of times.

7. A honeycomb body according to one of the preceding claims characterised in that at least one electrical conductor (26, 27; 36; 76) which is electrically insulated fro the clamped sheet metal layers (21, 22, 23; 31, 32; 71, 72) is also arranged between the clamped sheet metal layers (21, 22, 23; 31, 32; 71, 72).

8. A honeycomb body according to one of the preceding claims characterised in that the clamped sheet metal layers (21, 22) jointly have a structure, in particular a corrugated configuration.

9. A honeycomb body according to one of the preceding claims characterised in that the clamped sheet metal layers (11, 12; 21, 22; 31, 32; 41, 42; 51, 52; 61, 62; 71, 72; 81, 82; 91, 92) are jointly rolled to provide their final form.

10. A honeycomb body according to one of claims 1, 2, 3, 4, 6 or 9 characterised in that the clamped sheet metal layers (81, 82) project at the ends beyond the other sheet metal layers (84, 85) of the honeycomb body, are specifically at least as far as the clamping configuration (83) of the one sheet metal layer (82) embraces the other sheet metal layer (81).

11. A honeycomb body according to one of claims 1, 2, 3, 4, 6 or 9 characterised in that the other sheet metal layers (99) of the honeycomb body (90), which adjoin the clamped sheet metal layers (91, 92) are shortened by the amount by which the clamping configuration (93) of the one sheet metal layer (92) embraces the other sheet metal layer (91).

12. A honeycomb body according to one of the preceding claims characterised in that the clamped sheet metal layers (81, 82; 91, 92) are connected by a joining procedure, preferably hard-soldered, with their outside surfaces, to adjacent other sheet metal layers (84, 85; 97, 99) of the honeycomb body (90), at least in portions thereof.

## Revendications

1. Corps alvéolaire (90), notamment corps de support de catalyseur, constitué de couches de tôles (97) structurées au moins partiellement qui forment une pluralité de canaux (98) pouvant être traversés par un fluide, le corps alvéolaire (90) comportant une couche intermédiaire électriquement isolante (11, 12, 13, 14 ; 21, 22, 23, 24 ; 31, 32, 33, 34 ; 41, 42 ; 51, 52 ; 61, 62 ; 71, 72 ; 81, 82 ; 91, 92, 93, 94), caractérisé en ce que la couche intermédiaire (11, 12, 13, 14 ; 21, 22, 23, 24 ; 31, 32, 33, 34 ; 41, 42 ; 51, 52 ; 61, 62 ; 71, 72 ; 81, 82 ; 91, 92, 93, 94) comporte au moins deux couches de tôles (11, 12 ; 21, 22 ; 31, 32 ; 41, 42 ; 51, 52 ; 61, 62 ; 71, 72 ; 81, 81 ; 91, 92) agrafées ensemble mécaniquement mais isolées électriquement l'une de l'autre par une couche isolante (14 ; 24 ; 34 ; 94).

2. Corps alvéolaire (90) selon la revendication 1, caractérisé en ce que les couches de tôles agrafées (11, 12 ; 21, 22 ; 31, 32 ; 41, 42 ; 51, 52 ; 61, 62 ; 71, 72 ; 81, 81 ; 91, 92) forment ensemble une couche intermédiaire (11, 12, 13, 14 ; 21, 22, 23, 24 ; 31, 32, 33, 34 ; 41, 42 ; 51, 52 ; 61, 62 ; 71, 72 ; 81, 82 ; 91, 92, 93, 94), qui est constituée de part et d'autre d'une grande surface en métal, et qui de part et d'autre peut être reliée à d'autres couches de tôles (97, 99) par brasage ou par des processus similaires de technique d'assemblage.

3. Corps alvéolaire (90) selon l'une des revendications 1 ou 2, caractérisé en ce que les couches de tôles agrafées (11, 12 ; 21, 22 ; 31, 32 ; 41, 42 ; 51, 52 ; 61, 62 ; 71, 72 ; 81, 81 ; 91, 92) forment une couche intermédiaire électriquement isolante (11, 12, 13, 14 ; 21, 22, 23, 24 ; 31, 32, 33, 34 ; 41, 42 ; 51, 52 ; 61, 62 ; 71, 72 ; 81, 82 ; 91, 92, 93, 94) pouvant être mécaniquement sollicitée en traction, les forces de traction étant absorbées par l'agrafage de zones partielles (13, 23 ; 33 ; 83 ; 93) des couches de tôles (11, 12 ; 21, 22 ; 31, 32 ; 41, 42 ; 51, 52 ; 61, 62 ; 71, 72 ; 81, 81 ; 91, 92) et non par la couche isolante (14 ; 24 ; 34 ; 94).

4. Corps alvéolaire selon l'une des revendications 1, 2 ou 3, caractérisé en ce que l'une au moins des couches de tôles agrafées (12 ; 22 ; 32 ; 72 ; 82 ; 92) et la couche isolante (14 ; 24 ; 34 ; 94) enserrent les bords latéraux de l'autre couche de tôle (11 ; 21 ; 31 ; 71 ; 81 ; 91).

5. Corps alvéolaire selon l'une des revendications 1, 2 ou 3, caractérisé en ce que les couches de tôles agrafées (41, 42) sont pliées réciproquement l'une autour de l'autre.

6. Corps alvéolaire selon l'une des revendications 1, 2 ou 3, caractérisé en ce que les couches de tôles agrafées (51, 52 ; 61, 62) sont repliées plusieurs fois en épousement de forme les unes autour des autres.

7. Corps alvéolaire selon l'une quelconque des revendications précédentes, caractérisé en ce qu'entre les couches de tôles agrafées (21, 22, 23 ; 31, 32 ; 71, 72), il est encore disposé au moins un conducteur électrique (26, 27 ; 36 ; 76) qui est électriquement isolé des couches de tôles (21, 22, 23 ; 31, 32 ; 71, 72).

8. Corps alvéolaire selon l'une quelconque des revendications précédentes, caractérisé en ce que les couches de tôles agrafées (21, 22) présentent ensemble une structure, notamment une ondulation.

9. Corps alvéolaire selon l'une quelconque des revendications précédentes, caractérisé en ce que les couches de tôles agrafées (11, 12 ; 21, 22 ; 31, 32 ; 41, 42 ; 51, 52 ; 61, 62 ; 71, 72 ; 81, 81 ; 91, 92) sont laminées ensemble pour aboutir à leur forme finale.

10. Corps alvéolaire selon l'une quelconque des revendications 1, 2, 3, 4, 6 ou 9, caractérisé en ce que les couches de tôles agrafées (81, 82) dépassent en face frontale au-dessus des autres couches de tôles (84, 85) du corps alvéolaire, et ce au moins jusqu'au point où l'agrafage (83) de l'une des couches de tôle (82) enserre l'autre couche de tôle (81).

11. Corps alvéolaire selon l'une quelconque des revendications 1, 2, 3, 4, 6 ou 9, caractérisé en ce que les autres couches de tôles (99) du corps alvéolaire (90) qui sont contiguës aux couches de tôles agrafées (91, 92) sont raccourcies jusqu'au point où l'agrafage (93) de l'une des couches de tôle (92) enserre l'autre couche de tôle (91).

12. Corps alvéolaire selon l'une quelconque des revendications précédentes, caractérisé en ce que par leurs surfaces extérieures, les couches de tôles agrafées (81, 82 ; 91, 92) sont reliées par technique d'assemblage, au moins dans des zones partielles, a d'autres couches de tôles voisines (84, 85 ; 97, 99) du corps alvéolaire (90), de préférence par brasage fort.
